# EUROPEAN PATENT SPECIFICATION

(11) **EP 1 026 599 B1**
(45) Date of publication and mention of the grant of the patent: **28.09.2011**
(21) Application number: 00102166.6
(22) Date of filing: 08.02.2000
(51) Int. Cl.: G06F 3/12, G06F 13/38, G06F 13/12

(54) **Printer interface device, method of controlling it, and data storage medium**
Druckerschnittstellengerät, Steuerverfahren dafür und Datenspeichermedium
Dispositif d'interface d'imprimante, procédé de commande associé et support d'enregistrement de données

(30) Priority: 08.02.1999 JP 3003599; 18.01.2000 JP 2000009345
(43) Date of publication of application: 09.08.2000
(73) Proprietor: Seiko Epson Corporation, Shinjuku-ku Tokyo 163-0811 (JP)
(72) Inventor: Minowa, Masahiro, Suwa-shi, Nagano-ken 392-8502 (JP); Aruga, Kazuhisa, Suwa-shi, Nagano-ken 392-8502 (JP)
(74) Representative: MERH-IP Matias Erny Reichl Hoffmann

(56) References cited:
- EP-A- 0 096 407
- EP-A- 0 769 737
- US-A- 5 485 590

## Description

The present invention relates to an interface device adapted to be detachably mounted in a printer for connecting the printer to a host computer so as to allow exchange of data between the two. The present invention further relates to a method of controlling the interface device.

Various built-in interfaces for connecting a printer and a host computer have been proposed and are currently in use. A common interface uses the host computer's parallel port, another one the serial or RS-232 port, and yet others an IEEE (Institute of Electrical and Electronic Engineers) 1284 port. More recent interfaces use the USB (Universal Serial Bus) standard or a communications network to which the host computer is connected.

Command data sent by the host computer through such an interface to a printer is a byte stream of command data representing print commands and control commands. The print commands instruct the printer to print text or graphics, while the control commands invoke processes for controlling the printer.

While the shape and the design of the physical connector for connecting the interface to the host computer typically differ according to the interface standard, it is desirable for the printer hardware to be independent of the way it is connected to the host computer. More specifically, while users may replace the host computer, they commonly want to continue using the same printer.

This problem is addressed in part by using an exchangeable interface device to receive command data sent in a format conforming to the specific type of connector used for the connection to the host computer, perform such tasks as voltage conversion, impedance matching, buffering, interpreting, and filtering the received command data, and finally converting to and outputting the command data in the specific port format of the printer, the RS-232 format, for instance.

This makes it possible to use a single printer in a variety of situations by simply replacing the interface device. More specifically, a single basic printer can be supplied and adapted to various interface standards by installing the appropriate interface device in the respective printers. It is therefore possible to mass produce the printer, and thereby reduce the overall costs of the printer.

With conventional interface devices, when the host computer sends command data to the interface device, the interface device sends the received command data to the printer in the sequence received. The printer then stores the command data in a receive buffer. The printer notifies the host computer via the interface device when the receive buffer of the printer becomes full by sending an appropriate signal to the host computer via a busy signal line or by using an Auto Status Back (ASB) function as taught in EP-A-0 654 757. When the host computer is thus notified that the printer's receive buffer is full, it stops sending print data.

There is, however, a great demand for further improving the processing speed of the host computer and the printing speed of the printer without changing the printer itself by using the interface device built into the printer to appropriately buffer data. Furthermore, when the printer is compatible with real-time commands such as taught in EP-A-0 769 737 and the interface device receives a real-time command, the ability to respond to such real-time command and not simply store the real-time command in a buffer is required.

It is an object of the present invention to provide an interface device that meets such demands and can be installed in an expansion slot of a printer for connection to a host computer, is capable of monitoring the buffering status of the printer while receiving command data from the host computer and is capable of distinguishing real-time commands from other (non-real-time) commands. Another object of the invention is to provide a control method for controlling the interface device and a storage medium carrying the method in the form of a computer program.

These objects are achieved with an interface device as claimed in claim 1, a method as claimed in claim 4 and a storage medium as claimed in claim 6. Preferred embodiments of the invention are subject-matter of the dependent claims.

An interface device thus comprised can recognize real-time commands and send them to the printer even when the printer cannot receive data because, for example, the printer's receive buffer is full or the printer is off-line because its cover is open. When a normal command, i.e., a non-real-time command, is received, and the printer cannot receive the command data, the interface device preferably stores the received command data in an internal memory.

The second interface means of the interface device according to the present invention can have a connector conforming to the RS-232 standard.

The interface device according to the present invention can be designed to have a size that will fit within the printer's housing when it is installed in an expansion slot of the printer.

The interface device according to the present invention can be designed so that when the command transmission controller causes the second interface means to send real-time command data to the printer, this data is not stored in memory.

Yet further, the interface device according to the present invention can be designed so that when data sent by the second interface means is interrupted in the middle of a data sequence of a non-real-time command, the command transmission controller causes the real-time command data to be sent after transmission of this interrupted data sequence has been completed. It is therefore possible to prevent real-time command data from interrupting transmission of a non-real-time command data sequence. This is achieved by the interface device detecting whether a non-real-time command is currently being transmitted, and delaying transmission of real-time command data until transmission of the non-real-time command has been completed, that is, until there is a break between commands.

A program for controlling the interface device according to the present invention can be stored in machine-readable form on various types of storage medium such as a Compact Disc (CD), a floppy disk, a hard disk, a magneto-optical disk, a Digital Video Disk (DVD), a magnetic tape and a semiconductor memory. In addition, such program can be loaded into a server computer for the World Wide Web (WWW) so that users can download the program from the server and save the program in a local interface device to update the interface device control program so that the program according to the present invention is run by the interface device.

Other objects and attainments together with a fuller understanding of the invention will become apparent and appreciated by referring to the following description of preferred embodiments taken in conjunction with the accompanying drawings, in which:
- Fig. 1: illustrates the basic structure of the interface device;
- Fig. 2: is a perspective view of an interface device according to the present invention;
- Fig. 3: is a flow chart of a data receive/send process of an interface device;
- Fig. 4: is a flow chart of a data receive/send process according to a first embodiment of the present invention;
- Fig. 5: is a flow chart of a data receive/send process according to a second embodiment of the present invention;
- Fig. 6: is a flow chart of a 1 -byte send process in the second embodiment;
- Fig. 7: is a flow chart of a real-time command send/receive in the second embodiment;
- Fig. 8: is a typical block diagram of an interface device according to a third embodiment of the present invention;
- Fig. 9: is a flow chart of a 1 -byte receive process in the third embodiment;
- Fig. 10: is a flow chart of 1 -byte read process in the third embodiment;
- Fig. 11: is a flow chart a data copy process in the third embodiment; and
- Fig. 12: is a flow chart of a data transmission process in the third embodiment.

### Basic Structure

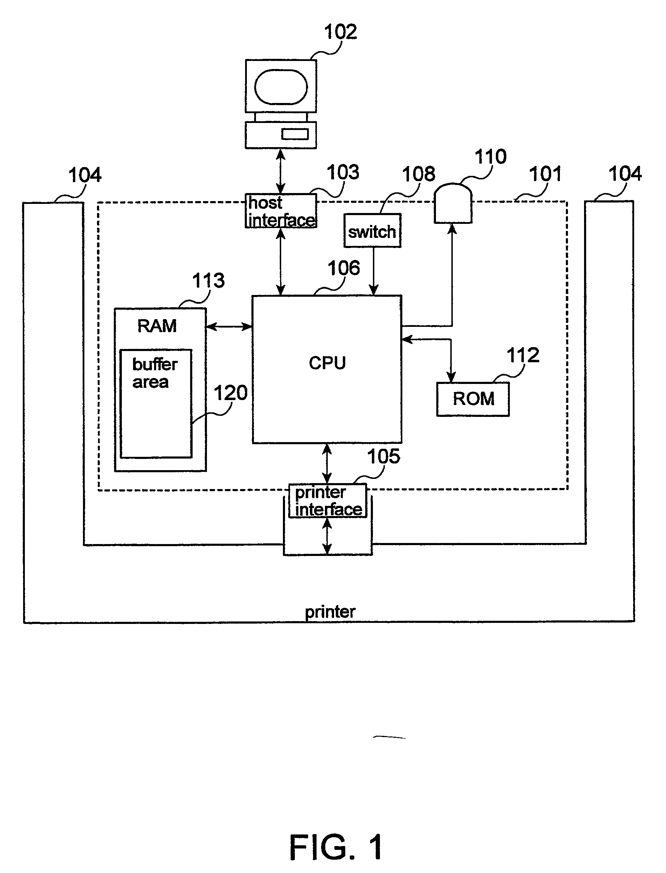

Fig. 1 is a block diagram of an exemplary basic structure of an interface device according to the present invention.

The interface device 101 is connected to a host computer 102 by way of host interface 103 so as to exchange data with the host computer, mainly to receive command data from the host computer 102.

The interface device 101 is further connected by way of printer interface 105 to printer 104 so as to exchange data with the printer, for instance, to send the command data received from the host computer 102 to the printer. Based on the print commands among the received command data, the printer 104 prints text and images on a printing medium such as paper, film, etc.. Various printer operations and settings are controlled by means of various control commands contained in the received command data.

The host interface 103 and the printer interface 105 can be compatible with various standards and protocols to enable, for example, serial data transmission conforming to the RS-232 standard, parallel data transmission conforming to the Centronics standard, network data exchange via an Ethernet 10Base-T, 100Base-T, or other networking protocol, or data transmission using the new USB or other new data transmission standard. Signal level conversions can be easily accommodated by providing a driver circuit for level conversions appropriate to the host interface 103 or printer interface 105 when the TTL (transistor-transistor logic) circuit drive voltage of the host computer 102 or printer 104 differs from the internal drive voltage of the interface device 101. To minimize costs the physical connectors of the host interface 103 and/or the printer interface 105 are preferably those of an existing standard.

The printer interface 105 notifies the interface device 101 whether the printer is ready to receive data (referred to RRD state hereinafter) or is not in an RRD state, for instance, because the receive buffer of the printer 104 is full. The CPU (central processing unit) 106 can therefore determine whether data can be sent to the printer 104 by monitoring the printer interface 105. This detection is possible using the ASB function of the printer 104, or by detecting the state of the busy signal line if the printer interface 105 has a busy signal line.

The CPU 106 also monitors the host interface 103 and, if data is received, detects whether data can be sent to the printer 104. If data cannot be sent to the printer 104, the CPU 106 buffers the data until it can be sent. It should be noted that prior art interface devices do not have a buffering capability.

A buffer area 120 reserved in RAM (random access memory) 113 is used for buffering command data. RAM 113 is also used for temporarily storing other data.

The CPU 106 itself operates in accordance with a program stored in ROM (read only memory) 112. When the printer is turned on and power is supplied to the interface device 101, the CPU 106 reads this program from ROM 112 and begins to run the program to control interface device 101. This program or BIOS (Basic Input Output System) stored in ROM 112 is preferably implemented in a manner such that it can be updated through the host computer 102. In such case a Compact Disc (CD), floppy disk, magneto-optical disk, hard disk, Digital Video Disc (DVD), magnetic tape, semiconductor memory, or other storage medium that can be read by host computer 102 can be employed to hold the program to be executed by the CPU 106.

When the power is turned on, the CPU 106 detects the setting of a DIP switch 108 to set, for example, the data length, parity check, transmission rate, and other parameter settings used by the host interface 103 and printer interface 105 for communication with the host computer and the printer, respectively.

The operating indicator 110 indicates that the interface device is working. The communications status of host interface 103 and printer interface 105, and the processing status of the CPU 106, can be indicated by, for example, changing the indicator color or flashing state.

It should be noted that while host interface 103, printer interface 105, operating indicator 110, ROM 112, and RAM 113 are described here as being directly connected to the CPU 106, these components can alternatively be connected indirectly to the CPU 106 by way of a bus.

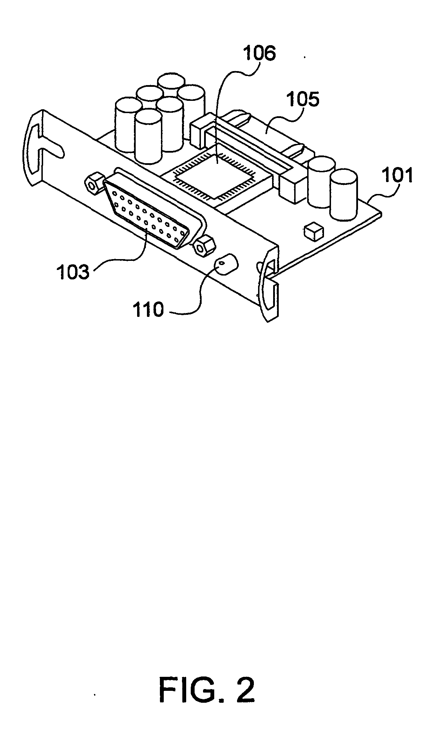

Fig. 2 is a perspective view of an exemplary interface device according to the present invention.

The host interface 103 (of which only the connector is shown) and the operating indicator 110 for the interface device 101 are disposed at the back, or outside, of the interface device 101. The interface device 101 is typically designed to have a size that fits completely into the expansion slot of the printer 104. An interface device designed in this manner is also called a printer expansion module or card.

By giving the interface device such size, the host interface 103 and operating indicator 110 appear to be disposed in the back of the printer 104 when the interface device 101 is installed in the printer 104. Furthermore, designing the interface device 101 to allow installation in an expansion slot of the printer 104 also protects the interface device 101 from accidental contact and impact. This type of interface device 101 design yet further helps to improve printer appearance and thus the aesthetics of an office in which the printer is used.

### Data receiving and sending

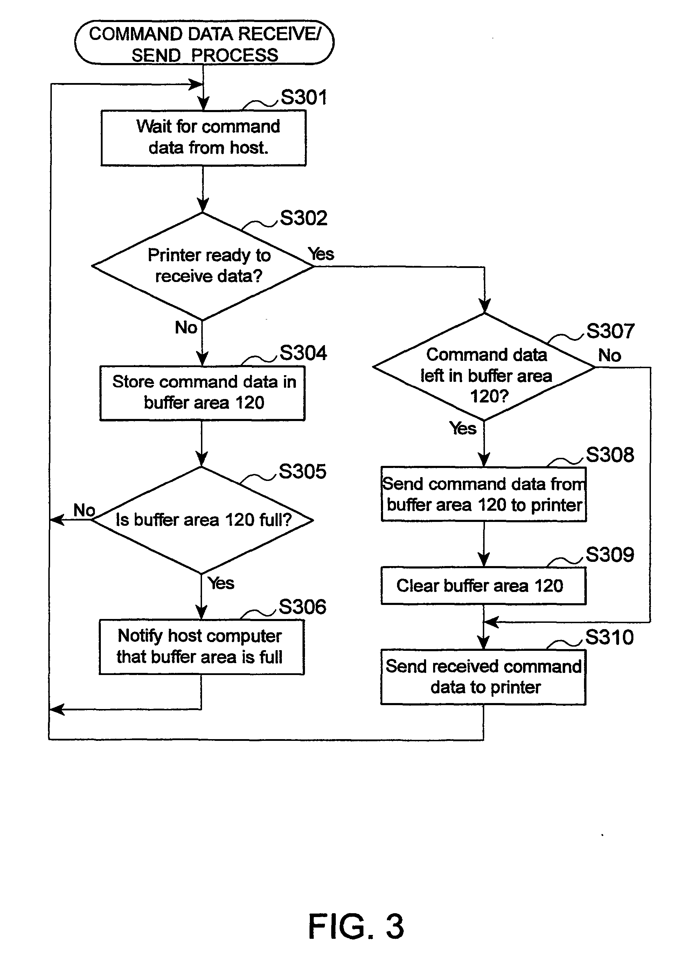

The basic data receiving (from the host computer) and sending (to the printer) process of the interface device is described next below with reference to the flow chart in fig. 3.

The CPU 106 first simply waits in a standby mode for command data from the host computer 102 to arrive at the host interface 103 (step S301). The CPU 106 can operate in a co-routine processing mode in which control can be shifted to other processes during this standby mode. In this case the host interface 103 generates a receive interrupt to alert the CPU 106 when command data arrive so that the CPU 106 leaves the standby mode and continues with the rest of the procedure.

When command data is received in step S301, the CPU 106 checks whether the printer 104 is an RRD state (step S302). As noted above, the CPU 106 can detect whether the printer 104 is in an RRD state directly by detecting the state of a busy signal line, or indirectly by detecting the status value sent by the printer's ASB function and stored in RAM 113.

If the printer is not in an RRD state at this time (step S302 returns *No*), the data received in step S301 is stored in buffer area 120 in RAM 113 (step S304). The buffer area 120 is typically organized as a FIFO (first in, first out) type queuing buffer, and can thus be achieved using a ring buffer or similar technique.

When the printer 104 cannot accept any data and received data is therefore gradually accumulated in buffer area 120, the available storage capacity left in buffer area 120 gradually decreases. When there is no more storage capacity left in the buffer area 120, it is said to be full.

After received command data is stored in the buffer area 120, it is determined in step S305 whether buffer area 120 is full. If it is (step S305 returns *Yes*), the host computer 102 is notified that the buffer is full (step S306), and the procedure loops back to step S301. It should be noted that this can be accomplished based on a protocol similar to that of the ASB function, or using the busy signal line if the host interface 103 is provided with a busy signal line.

If the buffer is not full (step S305 returns *No*), the procedure loops back to step S301. Alternatively, the host computer 102 can be notified that the buffer is not full before the procedure loops back to step S301.

By thus detecting and notifying the host computer 102 whether the buffer area 120 is full after storing the received command data in the buffer area 120, it is possible to prevent the host computer from sending command data that cannot be accepted by the interface device and to assure that there is always sufficient space in the buffer area to store the received data in step S304.

If, in step S302, the printer is ready to receive data, the CPU 106 detects whether there is any command data in the buffer area 120 (step S307). If there is (step S307 returns *Yes*), the buffered command data is sent to the printer 104 by way of printer interface 105 (step S308). The buffer area 120 is then cleared (step S309), after which the command data received in step S301 is sent to the printer 104 (step S310), and the procedure loops back to step S301.

If there is no command data in the buffer area 120 (step S307 returns *No*), the procedure advances to step S310.

If the printer's receive buffer becomes full while the buffered command data is being sent from the buffer area 120 in step S308, the data received in step S301 can be grouped with any data remaining in the buffer area 120 to a new block of buffered data.

### Experimental results

An interface device 101 as described above was tested under various operating parameters. The results are described below.

The host interface 103 was an RS-232 standard interface. The printer interface 105 was a clock synchronized serial interface designed for half duplex communication. The printer interface 105 performed any conversion required for communication with the host, and operated at a communications speed of 1.25 Mbps. A 40 byte buffer area was reserved in RAM 113 for data buffering.

When data is conventionally sent from a host computer to a printer using an RS-232 interface standard, the maximum communications rate is 38,400 bps. However, using an interface device operating with the specifications described above, the communications rate was improved to 115 kbps to 230 kbps, that is, the maximum data transfer rate used by today's most commonly available personal computers. Further experiments also demonstrated that communication at an even higher data transfer rate is also possible.

### Embodiment 1

In addition to the functions of the basic structure described above, in this first embodiment of the present invention command data received from the host computer includes both normal commands and real-time commands. A real-time command needs to be sent to the printer immediately. This first embodiment of the present invention is therefore based on the above-described basic structure, but differs in that a particular command transmission controller is achieved by means of the host interface 103 in conjunction with CPU 106, and that data is also transmitted to the host computer.

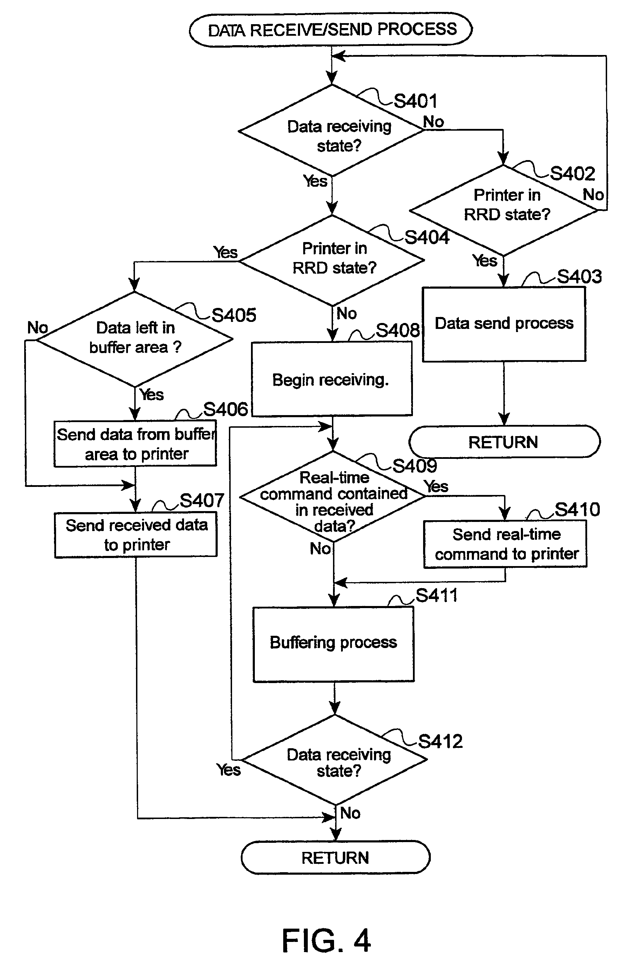

A preferred embodiment of a data receive/send process according to this embodiment is described next below with reference to flow chart in Fig. 4.

It should be noted that the expression "not in an RRD state" as used below means that the printer 104 is not ready to receive command data other than real-time command data.

When the data receive/send process begins, the interface device 101 detects whether the host interface 103 in a data receiving state (step S401).

If the host interface 103 is not in a data receiving state (step S401 returns *No*), the interface device 101 checks whether the printer 104 is in the RRD state, i.e., whether data from the host can be sent to the printer by way of printer interface 105 (step S402). If the printer is in the RRD state (step S402 returns *Yes*), a data send process for sending received data through the printer interface 105 to the printer (step S403) is performed, and this process ends. However, if the printer is not in the RRD state (step S402 returns *No*), the procedure loops back to step S401.

If the host interface 103 is in a data receiving state (step S401 returns *Yes*), the interface device 101 checks whether the printer 104 is in the RRD state (step S404). If yes (step S404 returns *Yes*), the interface device 101 checks whether previously received data is still in the buffer area of the RAM 113 (step S405). If there is (step S405 returns *Yes*), the buffered data is transferred to the printer 104 first (step S406), and then the data newly received by the host interface 103 is transferred to the printer 104 (step S407), and this process ends. If there is no previously received data left in the buffer area of the RAM 113 (step S405 returns *No*), the procedure advances to step S407.

If the printer 104 is not in the RRD state (step S404 returns *No*), the interface device 101 receives the data (step S408).

It is next determined whether there are any real-time command data in the received data (step S409). If no (step S409 returns *No*), the received data is accumulated in the buffer area 120 (step S411). If there is a real-time command (step S409 returns *Yes*), it is sent to the printer (step S410), and is also accumulated in the buffer area of RAM 113 (step S411).

It is then determined whether there is still data to receive (step S412). If there is no further data to receive (step S412 returns *No*), the process ends. If there is further data to receive (step S412 returns *Yes*), the procedure loops back to step S409.

It should be noted that a process can be performed in step S411 for detecting whether the buffer area 120 is full, and if it is, for notifying the host computer. Furthermore, data is accumulated in the buffer area of RAM 113 in step S411 whether or not the received data is a real-time command. However, because real-time commands have already been sent to the printer 104, it is alternatively possible to not accumulate any real-time commands in the buffer area 120.

### Embodiment 2

The interface device 101 of the first embodiment of the invention, sends real-time commands contained in data received via the host interface device 103 immediately to the printer 104. In this case, however, real-time command data may interrupt normal command data transmission when non-real time commands, referred to herein as "normal commands" are data streams of more than a single byte.

For the first embodiment it is sufficient when the printer 104 uses a command system that allows real-time commands and normal commands to be distinguished from one another. This can be achieved, for example, by transmitting data in byte units (8 bit units) where the highest bit is always set (i.e., has a value of 1) to indicate a real-time command, and is always cleared (i.e., set to 0) to indicate a normal command.

The first embodiment does not, however, allow for compatibility with all existing command systems. This is because unexpected operations can occur when a real-time command interrupts a normal command data stream in existing command systems.

Let us consider, for example, transmitting a data stream as described below from the host computer 102 through interface device 101 to printer 104. It should be noted that "*0x*" below is a prefix indicating a hexadecimal value, and sending the ASCII code for a certain character is indicated by including the character in quotation marks (" ").
*0x1b* "*t*"*0* means to select character code table 0. The last value (0) is the parameter.
*0x1b* "*R*"*1* means to select international character set 1. The last value (1) is the parameter.
"*0123456789*" means to print characters 0 to 9.
*0x0a* is a carriage return.
*0x10 0x04 1* indicates a real-time command requesting the status of the printer.

These commands are sent as shown below from the host computer 102 to the interface device 101:
*0x1b* "*t*"*0 0x1b* "*R*"*1* "*0123456789*" *0x0a 0x10 0x04 1*

If the interface device 101 starts sending this data stream in the above sequence to the printer 104, and the receive buffer of the printer 104 becomes full after it received *0x1b*"*t*"*0 0x1b*"*R*" so that the rest of the data stream cannot be received, real-time command *0x10 0x04 1* may be transmitted by step S410 before transmission of the interrupted data stream can be resumed. The command stream actually received by the printer 104 would then be as follows:
*0x1b* "*t*"*0 0x1b* "*R*" *0x10 0x04 1 1* "*0123456789*" *0x0a*

When this command stream is received, the printer 104 immediately returns the printer status to the interface device 101 in response to the real-time command *0x10 0x04 1*, selects character code table 0, then selects international character set 16 (= *0x10*), skips the following data *0x04 1 1* it cannot interpret, and prints characters 0 to 9. This is obviously different from the expected operation.

This second embodiment of the present invention allows to correctly interpret received commands even in such cases. When a data stream such as that described above is sent from the host computer 102, interface device 101 according to the second embodiment functions so that the printer 104 receives a data stream as shown below:
*0x1b* "*t*"*0 0x1b* "*R*"*1 0x10 0x04 1* "*0123456789*" *0x0a*

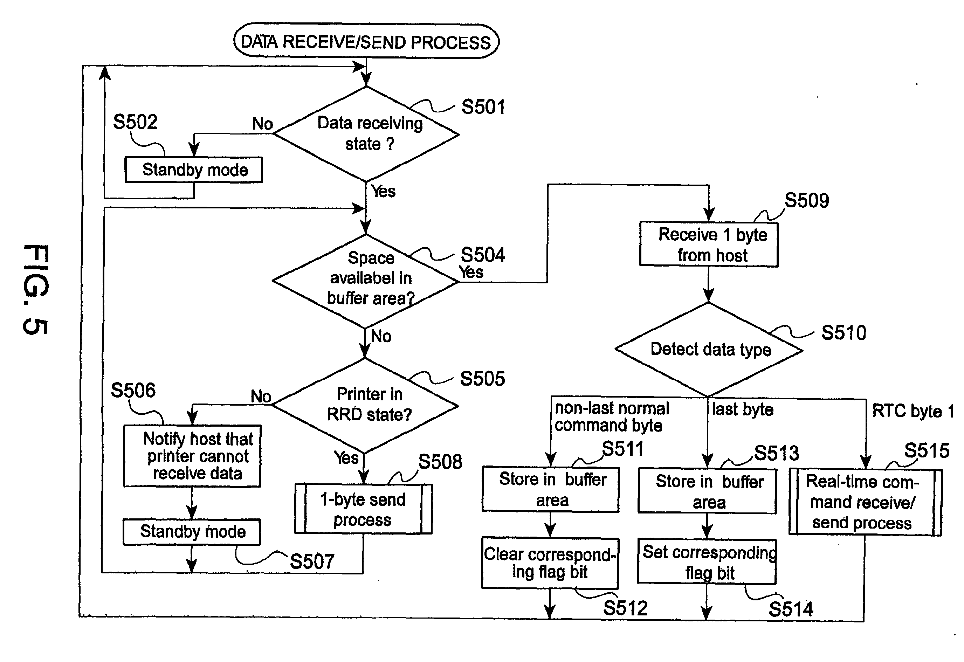

How this is achieved will be explained below with reference to the flow chart in Fig. 5. When the process illustrated in Fig. 5 starts, the interface device 101 checks whether the host interface 103 is in a data receiving state (step S501). If not (step S501 returns *No*), it enters a standby mode (step S502) and then the procedure loops back to step S501. It should be noted that a 1-byte send process described below can be activated by an interrupt during the standby mode of step S502. This 1-byte send process is activated when the printer 104 enters the RRD state, e.g., because there is free space in the printer's receive buffer. This 1-byte send process can be repeatedly activated during this standby mode.

If the host interface 103 is in a data receiving state (step S501 returns *Yes*), the interface device 101 checks whether space is available in the buffer area 120 (step S504). If not (step S504 returns *No*), it checks whether the printer 104 is in the RRD state (step S505). If the printer 104 is not in the RRD state (step S505 returns *No*), it so notifies the host computer 102 (step S506), enters a standby mode (step S507), and then the procedure loops back to step S504. It should be noted that the 1-byte send process described below can be activated by an interrupt during the standby mode of step S507. This 1-byte send process can be repeatedly activated during this standby mode.

If the printer 104 is in the RRD state (step S505 returns *Yes*), the 1-byte send process described below is run (step S508), and the procedure loops back to step S504.

If space is available in the buffer area 120 (step S504 returns *Yes*), data is received through the host interface 103 (step S509). Step S510 then detects whether the received data is one of the following types (step S510):
■ last byte of a normal command
■ a normal command byte other than the last byte
■ the first byte of a real-time command

In this embodiment, a first flag area comprising one flag bit for each byte of the buffer area 120 is also reserved in RAM 113. If the received data byte is a normal command byte other than the last byte (step S510, non-last normal command byte), the byte is added to the receive buffer (step S511), and the corresponding flag bit in the first flag area is cleared to 0 (step S512); then the procedure loops back to step S501. If the received data byte is the last byte of a normal command (step S510, last byte), the byte is also added to the receive buffer (step S513), but the corresponding flag bit in the first flag area is set to 1 in this case (step S514), before the procedure loops back to step S501.

When a data sequence as shown in the first line below is accumulated in the receive buffer as a result of the above process, the bit sequence stored in the first flag area will be as shown in the second line.

| 0x1b | "t" | 0 | 0x1b | "R" | 1 | "0 | 1 | 2 | 3 | 4 | 5 | 6 | 7 | 8 | 9" | 0x0a |
|---|---|---|---|---|---|---|---|---|---|---|---|---|---|---|---|---|
| 0 | 0 | 1 | 0 | 0 | 1 | 1 | 1 | 1 | 1 | 1 | 1 | 1 | 1 | 1 | 1 | 1 |

When a flag bit in the first flag area is set to 1, it means that a real-time command may be transmitted to the printer immediately after the byte corresponding to that flag bit has been sent.

If a received data byte is the first byte in a real-time command (step S510, RTC byte 1),the real-time command receive/send process described below is performed (step S515), and the procedure loops back to step S501.

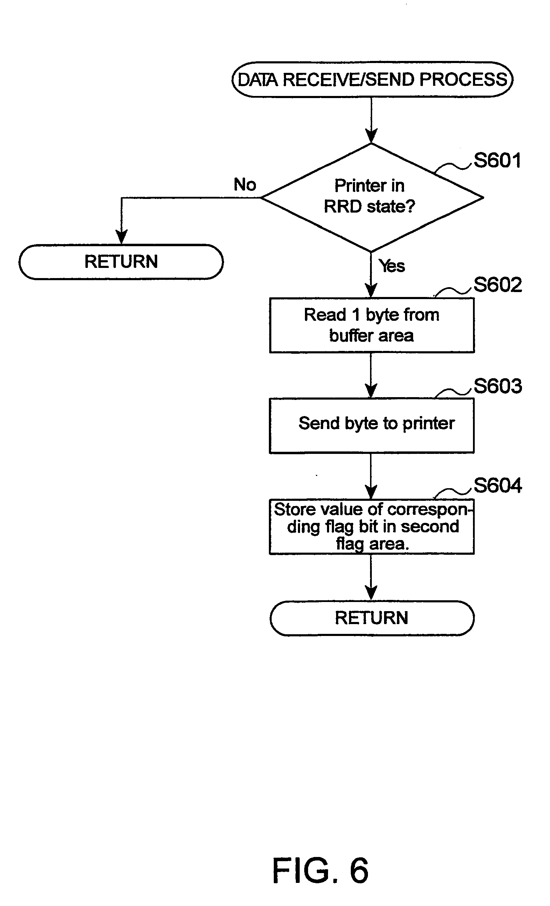

Fig. 6 is a flow chart of 1-byte send process in this second embodiment. As noted above, this 1-byte send process is executed when no space is available in the buffer area 120 of interface device 101, and/or when space becomes available in the receive buffer of the printer 104.

The first step is to detect whether the printer 104 is in the RRD state (step S601). If not (step S601 returns *No*), control returns to the calling process. If the printer 104 is in the RRD state (step S601 returns *Yes*), 1 byte is read from buffer area 120 (step S602), and is sent to the printer 104 (step S603). The space available in the buffer area 120 thus increases by 1 byte. The value of the flag bit in the first flag area corresponding to the byte just sent is stored as an insertion flag in a second flag area also reserved in RAM 113 (step S604). This means that whether the byte last transmitted by step S603 was the last byte of a command stream is stored in this second flag area of RAM 113. Once this value is stored, the 1-byte send process returns to the calling process.

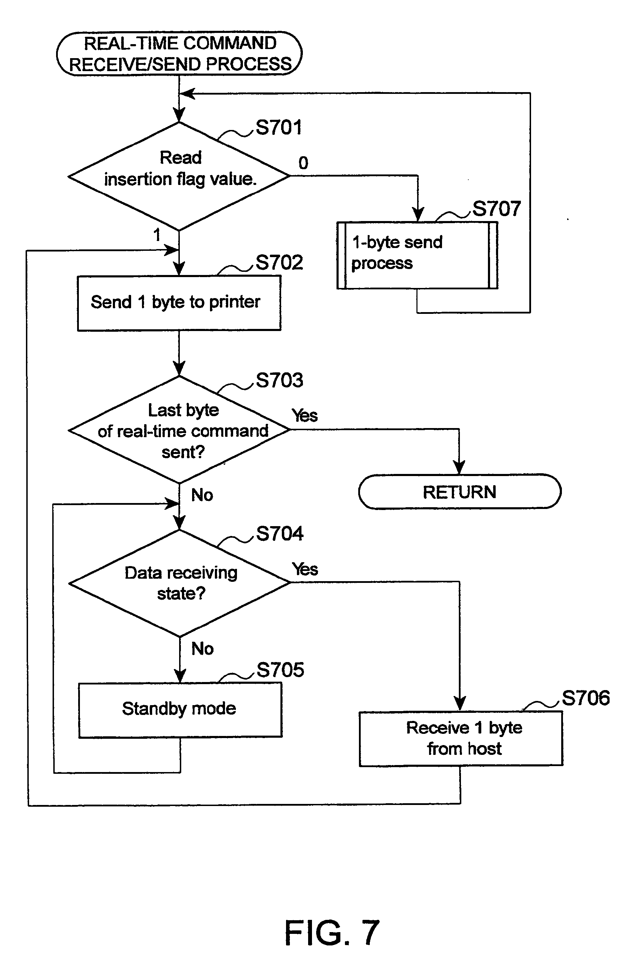

Fig. 7 is a flow chart of real-time command receive/send process in the second embodiment. The first step in this process is to check the value of the insertion flag (step S701). If the flag is set to 1, that is, if a real-time command can be inserted (step S701 returns 1), the real-time command byte is sent to the printer 104 (step S702). It should be noted that the printer 104 executes the process corresponding to the received real-time command as soon as all bytes of the command have been received and even if the receive buffer of the printer 104 is full.

Step S703 then checks whether the last byte sent in step S702 was the last byte of the real-time command. If it was (step S703 returns *Yes*), the real-time command receive/send process ends and control returns to the calling process. However, if sending of the real-time command data stream is not yet completed (step S703 returns *No*), step S704 checks whether the host interface 103 is still in the data receiving state. If not (step S704 returns *No*), there is a a standby mode is entered (step S705), and the procedure then loops back to step S704. If the host interface 103 is still in the receiving state (step S704 returns *Yes*), the transmitted byte is received (step S706), and the procedure loops back to S702.

At the first pass through step S702 the byte received in step S509 is transmitted, but in subsequent loops through step S702 the byte received in step S706 is transmitted to the printer 104.

If the insertion flag is set to 0, that is, if a real-time command cannot be inserted (step S701 returns 0), the 1-byte send process described above is executed (step S707) and the procedure loops back to step S701.

### Embodiment 3

Similarly to the second embodiment, the interface device according to a third embodiment of the invention relates to the handling of command data containing both normal commands (non-real-time commands) and real-time commands, so as to prevent a real-time command from being inserted into a normal command.

### A. Typical configuration

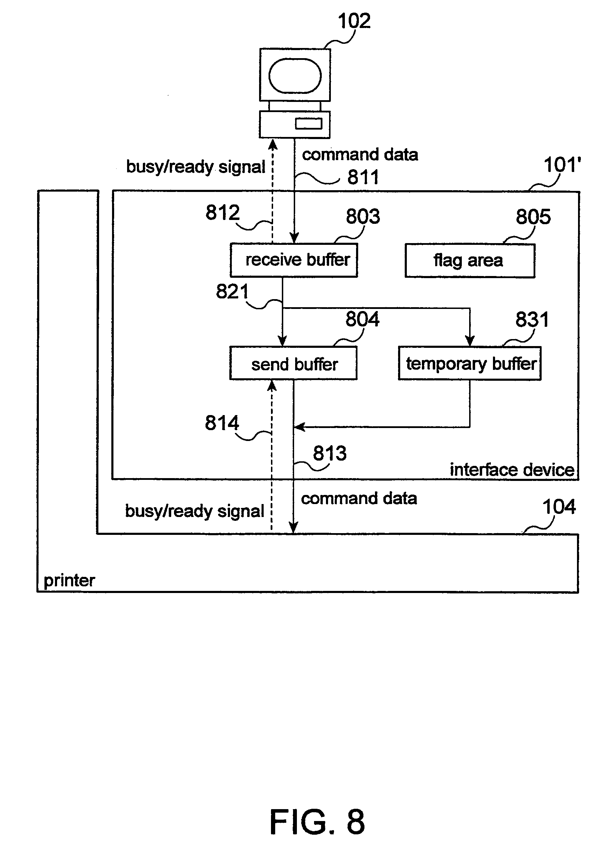

Fig. 8 is a block diagram showing a typical functional configuration of the interface device according to this third embodiment and its relationship with the printer. Like the first and second embodiments, this interface device 101' is inserted into an expansion slot of printer 104 for connection with the printer.

The interface device 101' comprises a RAM as temporary storage with a receive buffer 803, a send buffer 804, and a flag area 805 being reserved in the RAM. When the flag area 805 is set, that is, stores a non-zero value, the last command data received was a real-time command. A temporary buffer 831 is also reserved in the RAM for temporarily storing the command data stream as it is being received if it is not known whether the command data stream being received is a real-time command.

When command data is sent (811) from the host computer 102, the command data is stored in receive buffer 803. The value of the flag area 805 is set or cleared accordingly depending on whether or not the command data represents a real-time command. The command data stored in receive buffer 803 is appropriately copied (821) to send buffer 804 or temporary buffer 831, and is sent (813) to the printer 104.

A busy/ready signal is sent (813) from the printer 104 to interface device 101', and the interface device 101' monitors the received signal to execute the appropriate process. The interface device 101' also sends (812) the busy/ready signal to the host computer 102.

### B. 1-byte receive process

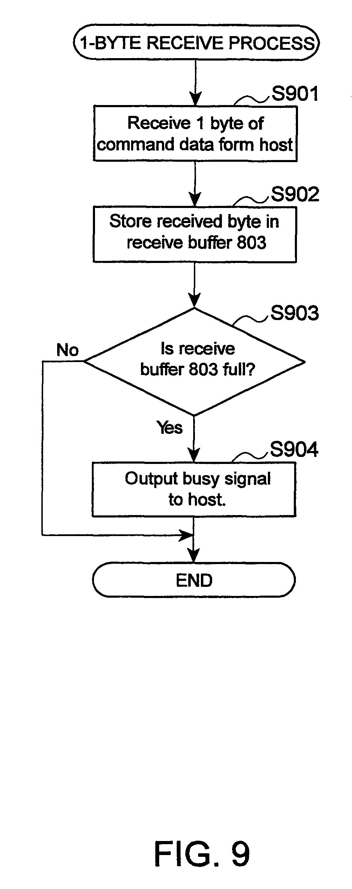

Fig. 9 is a flow chart of a 1-byte receive process activated by a receive interrupt that occurs when command data from the host computer 102 arrives (811) at the interface device 101'.

In the first step of this process the interface device 101' reads one byte of command data from the host interface (not shown in Fig. 9 but corresponding to 103 in Fig. 1) (step S901). Next, the read command data is stored in the receive buffer (step S902). Storing in the receive buffer is accomplished by adding data in a FIFO (first in, first out) method. The receive buffer 803 can thus be achieved as a queue of a fixed maximum length (buffer length) using, for example, a ring buffer.

The interface device 101' then detects whether the receive buffer 803 is full (step S903). If the receive buffer 803 is full (step S903 returns *Yes*), the interface device 101' outputs a busy signal to the host computer 102 (step S904), and this process ends. If the receive buffer 803 is not full (step S903 returns *No*), this process ends immediately. In this case, the busy/ready signal state (812) is held as before.

### C. Data copy process

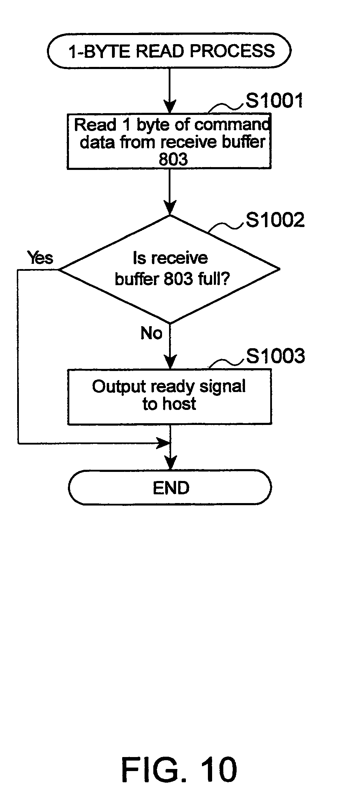

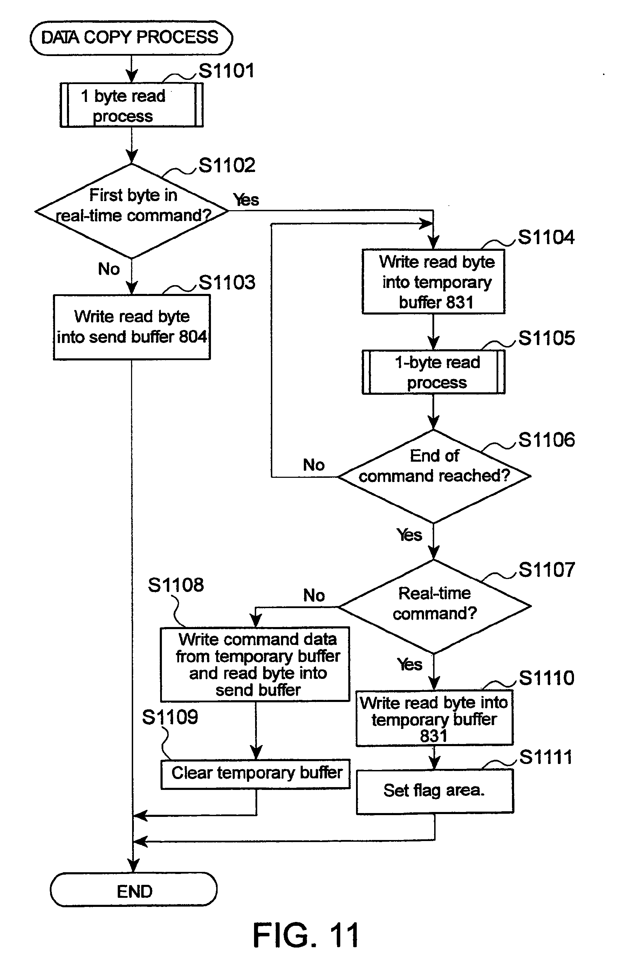

Fig. 10 is a flow chart of a 1-byte read process activated when command data is copied (821) from the receive buffer 803 to the send buffer 804. Fig. 11 is a flow chart of a data copy process whereby command data is copied, for example, using the above-noted 1-byte read process. It should be noted that in this exemplary embodiment of the invention the 1-byte read process of Fig. 10 is called by the data process of Fig. 11.

Referring to Fig. 10, when the 1-byte read process is activated, the interface device 101' reads one byte from the head of the receive buffer 803, and stores the read byte in a register, for example, in the CPU (not shown in the figure) of the interface device 101' (step S1001). As noted above, the receive buffer 803 is a FIFO queue, and the first byte (the head of the buffer) is, therefore, the oldest one of the bytes stored in the receive buffer 803.

After reading one byte in step S1001, the interface device 101' detects whether the receive buffer 803 is full (step S1002). If the receive buffer 803 is not full (step S1002 returns *No*), the interface device 101' sends a ready signal to the host computer 102 (step S1003), and this process ends. If the receive buffer 803 is full (step S1002 returns *Yes*), this process terminates immediately. In this case, the busy/ready signal state (812) is held as before.

Turning now to Fig. 11, it should be noted that this data copy process is activated when data is stored in the receive buffer 803. The timing at which this data copy process is executed can be appropriately selected according to the objective and application. For example, the data copy process can be activated by a timer interrupt occurring at a specific time interval, when there is not other process to be performed, when the receive buffer 803 becomes full, or using a combination of these criteria.

When this data copy process starts, the above-described 1-byte read process is executed (step S1101). The interface device 101' then checks whether the command data read into a register, for example, by the 1-byte read process (step S1001 in Fig. 10), is the first byte of a real-time command (step S1102).

If a command system as described above is used, the first byte of a real-time command is *0x10*, but the invention is not limited to this and other real-time command formats can be alternatively used. If *0x10* is not used to identify the first byte of a real-time command, it is also possible to sent *0x10* as part of a normal command.

If the read byte is not the first byte of a real-time command (step S1102 returns *No*), the byte is written into the send buffer 804 (step S1103), and this process ends. It should be noted that the send buffer 804 is, like the receive buffer 803, a FIFO type queue. If the read byte is the first byte of a real-time command (step S1102 returns *Yes*), the byte is written into the temporary buffer 831 (step S1104). The 1-byte read process is then performed again (step S1105), and the interface device 101' checks whether that read command data byte is the last byte in the command (step S1106). If not (step S1106 returns *No*), the procedure loops back to step S1104.

If the read command data byte is the last byte in the command (step S1106 returns *Yes*), interface device 101' checks whether the command data sequence that has been stored in the temporary buffer 831 and the command data byte just read in step S1104 combine to a real-time command (step S1107). If not (step S1107 returns *No*), the command data (sequence) stored in temporary buffer 831 and the last read command data byte are copied sequentially to the send buffer 804 (step S1108), the temporary buffer 831 is cleared (step S1109), and this process ends. If a real-time command is formed (step S1107 returns *Yes*), the read byte is added to those already in the temporary buffer 831 (step S1110), the flag area 805 is set (step S1111), and this process ends.

### D. Send process

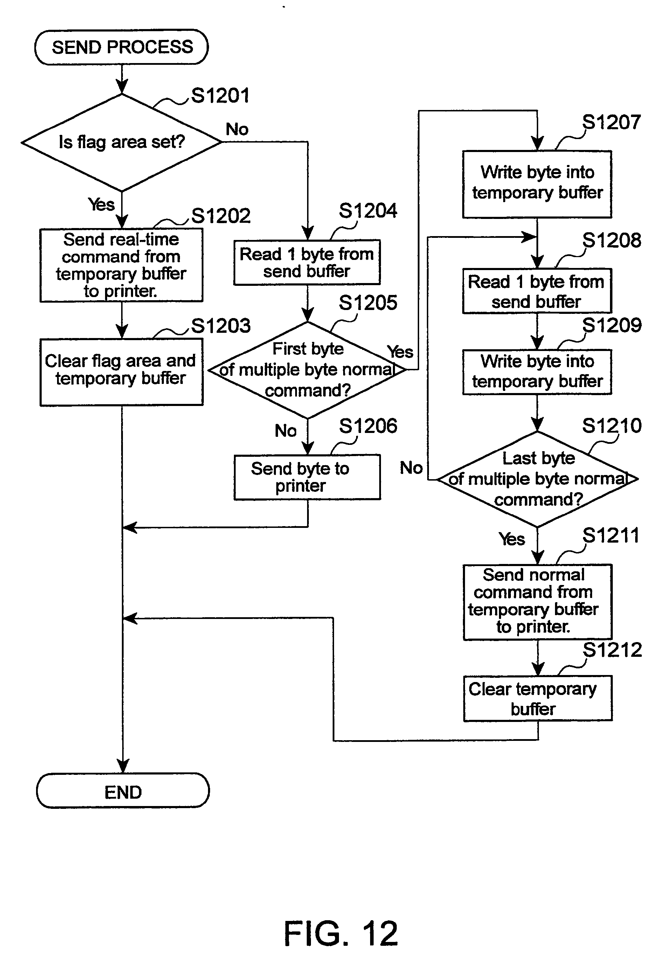

Fig. 12 is a flow chart of a send process whereby the interface device 101' sends (812) command data stored in the send buffer 804 to the printer 104. It should be noted that this send process is started when data is stored in the send buffer 804 or temporary buffer 831. The timing at which this process is executed can be appropriately selected according to the objective and application. For example, the process can be activated by a timer interrupt occurring at a specific time interval, when there is no other process to be performed, when the send buffer 804 becomes full, when the flag area 805 is set, or using a combination of these criteria.

Referring no to Fig. 12, when the send process starts, the interface device 101' checks whether the flag area 805 is set (step S1201). If it is (step S1201 returns *Yes*), the command data sequence for the real-time command stored in temporary buffer 831 is sent to the printer 104 (step S1202), the flag area 805 and temporary buffer 831 are cleared (step S1203), and this process ends. It should be noted that the busy/ready signal state of the printer 104 is not checked when a real-time command is to be sent to the printer 104. This is because a real-time command is sent to the printer 104 even when the printer 104 is busy or not in the RRD state.

If the flag area 805 is not set (step S1201 returns *No*), one byte is read from the send buffer 804 (step S1204), and the interface device 101' checks whether the read byte is the first byte of a normal command comprising multiple bytes (a multiple-byte command) (step S1205). If this byte is not the first byte or if the normal command is only one byte long (step S1205 returns *No*), the read byte is sent (step S1206) and this process ends. If the read byte is the first byte of a normal multiple-byte command (step S1205 returns *Yes*), the byte is written into the temporary buffer 831 (step S1207), another byte is read from the send buffer 804 (step S1208) and is written into the temporary buffer 831 (step S1209). Step S1210 then checks whether this other byte completes the command. If not (step S1210 returns *No*), the procedure loops back to step S1208. If the byte completes the command (step S1210 returns *Yes*), the command data sequence of the normal command now stored in temporary buffer 831 is sent to the printer 104 (step S1211), the temporary buffer 831 is cleared (step S1212), and this process ends.

It should be noted that transmission in step S1206 and step S1211 first checks whether the printer is in the RRD state, and, if not, waits for the printer 104 to enter the RRD state before transmission begins.

As a result of this process, in the interface device 101' received command data is first checked as to whether it represents a real-time command and, if so, the flag area 805 is set. As a result, a real-time command is sent with priority over other command data already stored in the send buffer 804, and real-time commands do not interfere with other commands in the sense such interference has been defined in the second embodiment.

It will also be obvious to those skilled in the art that the sequence of the processes above described are only exemplary and may be varied in many ways without departing form the scope of the present invention as defined in the appended claims.

### Effects of the invention

Some of the merits and benefits of the present invention are described below.

An interface device for a printer and a control method for the interface device can be provided such that the interface device is installed to an expansion slot of the printer and connected to a host computer to receive data sent by the host computer while monitoring the data buffering status of the printer so that data from the host computer can be appropriately buffered and sent to the printer by the interface device.

It is also possible to provide a printer interface device and interface device control method whereby the host computer can be notified when the interface device cannot buffer data from the host computer.

It is therefore possible to shorten the data transmission delay time of the host computer, and thus provide a printer interface device and interface device control method suitable for increasing the speed of a printing process.

It is yet further possible to provide a printer interface device and interface device control method suitable for reducing cost by using a low cost connector for communication with the printer.

It is yet further possible to provide a printer interface device and interface device control method whereby office space can be saved and appearance can be improved by installing the interface device inside the printer.

It is yet further possible to provide a printer interface device and interface device control method whereby real-time commands and other command data that should be sent to the printer with priority over other normal commands are reliably sent to the printer and buffering is adapted to the characteristics of the command data sent from a host computer when the printer is compatible with processing such real-time commands and other priority commands.

The interface device control method of the invention can also be provided in the form of a software program recorded to a data storage medium, which can then be easily distributed and sold independently of the interface device. An interface device and interface device control method according to the present invention can also be achieved as a result of an interface device executing this program of the present invention recorded to a data storage medium

## Claims

1. An interface device adapted to be mounted in a printer for connecting the printer to a host computer and for transferring data, including command data, from the host computer to the printer, comprising:
first interface means (103) for detachably connecting the interface device (101; 101') to the host computer (102) and for receiving command data from the host computer (102), and
second interface means (105) for detachably connecting the interface device (101; 101') to the printer (104), for sending said data to the printer and for receiving status information from the printer indicating whether or not the printer is ready to receive data;
wherein said data includes two distinct types of command data, real-time command data and non-real-time command data,
the interface device further
comprising detector means (106) responsive to said second interface means (105) for detecting a first state when said status information indicates the printer is ready to receive data, and to detect a second state, otherwise;
command interpretation means (106) for detecting any real-time command data among the command data received by said first interface means (103),
storage means (113, 120; 803, 804) for storing data received by said first interface means (103) when the detector means (106) detects said second state;
discriminating means (106) for detecting if said storage means can store further data;
notifying means responsive to said discriminating means (106) for notifying the host computer (102) when the discriminating means detects that said storage means (113, 120; 803, 804) cannot store further data; and
control means (106) for controlling, when the detector means detects said first state, the second interface means (105) to send data stored in the storage means (113, 120; 803, 804) and subsequently send data that were received by the first interface means (103) after the detector means (106) detects said first state
said control means (106) including a command transmission controller for causing said second interface means (105) to send real-time command data detected by said command interpretation means (106) to the printer irrespective of whether said detector means detects said first or said second state.

2. The device of claim 1, **characterized in that** said command transmission controller (106) is adapted to control said second interface means (105) to send, when non-real-time command data is being sent to the printer, the real-time command data after completing transmission of a predefined sequence of said non-real-time command data.

3. The device of claim 1 or 2 **characterized in that** said detector means, said command interpretation means, said control means (106) and said command transmission controller are implemented by a program-controlled microprocessor (106).

4. A method of controlling an interface device as defined in claim 1, comprising the following steps,
a) receiving data from the host computer (102);
b) receiving status information from the printer indicating whether or not the printer is ready to receive data;
c) detecting a first state when said status information indicates the printer is ready to receive data, and detecting a second state, otherwise:
d) detecting any real-time command data among the data received in step (a);
e) storing, when said second state is detected in step c), data received in step a) in storage means (113, 120; 803, 804) of the interface device;
f) detecting if said storage means (173, 120; 803, 804) can store further data and notifying the host computer (102), when said storage means (113, 120; 803, 804) cannot store further data;
g) sending, when said first state is detected in step c), data stored in the storage means (113, 120; 803, 804) and subsequently sending data that were received in step a) after said first state was detected: and
h) sending real-time command data irrespective of whether said first or said second state is detected in step (c), while sending non-real-time command data only if said first state is detected in step (c).

5. The method of claim 4, wherein when non-real-time command data is being sent to the printer, step (h) comprises sending the real-time command data after completing transmission of a predefined sequence of said non-real-time command data.

6. A machine readable data storage medium carrying computer program means which, when executed in an interface device as defined in claim 3 performs the method as defined in claim 4 or 5.

## Patentansprüche

1. Schnittstellenvorrichtung, die ausgebildet ist, in einem Drucker angebracht zu werden, zum Verbinden des Druckers mit einem Hostcomputer und zum Übertragen von Daten, einschließlich Befehlsdaten, von dem Hostcomputer zu dem Drucker, die aufweist:
erste Schnittstellenmittel (103) zum entfernbaren Verbinden der Schnittstellenvorrichtung (101; 101') mit dem Hostcomputer (102) und zum Empfangen von Befehlsdaten von dem Hostcomputer (102), und
zweite Schnittstellenmittel (105) zum entfernbaren Verbinden der Schnittstellenvorrichtung (101; 101') mit dem Drucker (104), zum Senden der Daten an den Drucker und zum Empfangen von Statusinformation von dem Drucker, die anzeigt, ob der Drucker bereit zum Empfangen von Daten ist oder nicht;
wobei die Daten zwei unterschiedliche Typen von Befehlsdaten umfassen, Echtzeit-Befehlsdaten und nicht-Echtzeit-Befehlsdaten,
wobei die Schnittstellenvorrichtung weiter
Detektormittel (106) aufweist, reagierend auf das zweite Schnittstellenmittel (105), zum Erfassen eines ersten Zustands, wenn die Statusinformation anzeigt, dass der Drucker bereit zum Empfangen von Daten ist, und ansonsten zum Erfassen eines zweiten Zustands;
Befehlsinterpretationsmittel (106) zum Erfassen von Echtzeit-Befehlsdaten unter den Befehlsdaten, die von dem ersten Schnittstellenmittel (103) empfangen werden,
Speichermittel (113, 120; 803, 804) zum Speichern von Daten, die von dem ersten Schnittstellenmittel (103) empfangen werden, wenn das Detektormittel (106) den zweiten Zustand erfasst;
Unterscheidungsmittel (106) zum Erfassen, ob das Speichermittel weitere Daten speichern kann;
Benachrichtigungsmittel, reagierend auf das Unterscheidungsmittel (106), zum Benachrichtigen des Hostcomputers (102), wenn das Unterscheidungsmittel erfasst, dass das Speichermittel (113, 120; 803, 804) keine weitere Daten speichern kann; und
Steuerungsmittel (106) zum Steuern, wenn das Detektormittel den ersten Zustand erfasst, des zweiten Schnittstellenmittels (105) zum Senden von Daten, die in dem Speichermittel (113, 120; 803, 804) gespeichert sind, und zum nachfolgenden Senden von Daten, die von dem ersten Schnittstellenmittel (103) empfangen werden, nachdem das Detektormittel (106) den ersten Zustand erfasst;
wobei das Steuerungsmittel (106) eine Befehlsübertragungssteuerung umfasst, um das zweite Schnittstellenmittel (105) zu veranlassen, Echtzeit-Befehlsdaten, die von dem Befehlsinterpretationsmittel (106) erfasst werden, an den Drucker zu senden, unabhängig davon, ob das Detektormittel den ersten oder den zweiten Zustand erfasst.

2. Vorrichtung gemäß Anspruch 1, **dadurch gekennzeichnet, dass** die Befehlsübertragungssteuerung (106) ausgebildet ist, das zweite Schnittstellenmittel (105) zu steuern zum Senden, wenn nicht-Echtzeit-Befehlsdaten an den Drucker gesendet werden, der Echtzeit-Befehlsdaten nach einem Abschluss einer Übertragung einer vordefinierten Sequenz der nicht-Echtzeit-Befehlsdaten.

3. Vorrichtung gemäß Anspruch 1 oder 2, **dadurch gekennzeichnet, dass** das Detektormittel, das Befehlsinterpretationsmittel, das Steuerungsmittel (106) und die Befehlsübertragungssteuerung durch einen programmgesteuerten Mikroprozessor (106) implementiert werden.

4. Verfahren zum Steuern einer Schnittstellenvorrichtung gemäß Anspruch 1, das die folgenden Schritte aufweist:
a) Empfangen von Daten von dem Hostcomputer (102);
b) Empfangen von Statusinformation von dem Drucker, die anzeigt, ob der Drucker bereit ist zum Empfangen von Daten oder nicht;
c) Erfassen eines ersten Zustands, wenn die Statusinformation anzeigt, dass der Drucker bereit ist zum Empfangen von Daten, und ansonsten Erfassen eines zweiten Zustands;
d) Erfassen von Echtzeit-Befehlsdaten unter den Daten, die in Schritt (a) empfangen werden;
e) Speichern, wenn der zweite Zustand in Schritt c) erfasst wird, von Daten, die in Schritt (a) empfangen werden, in einem Speichermittel (113, 120; 803, 804) der Schnittstellenvorrichtung;
f) Erfassen, ob das Speichermittel (113, 120; 803, 804) weitere Daten speichern kann, und Benachrichtigen des Hostcomputers (102), wenn das Speichermittel (113, 120; 803, 804) keine weiteren Daten speichern kann;
g) Senden, wenn der erste Zustand in Schritt c) erfasst wird, von Daten, die in dem Speichermittel (113, 120; 803, 804) gespeichert sind, und nachfolgendes Senden von Daten, die in Schritt a) empfangen wurden, nachdem der erste Zustand erfasst wurde; und
h) Senden von Echtzeit-Befehlsdaten unabhängig davon, ob der erste oder der zweite Zustand in Schritt (c) erfasst wird, hingegen Senden von nicht-Echtzeit-Befehlsdaten nur, wenn der erste Zustand in Schritt (c) erfasst wird.

5. Verfahren gemäß Anspruch 4, wobei, wenn nicht-Echtzeit-Befehlsdaten an den Drucker gesendet werden, der Schritt (h) aufweist ein Senden der Echtzeit-Befehlsdaten nach einem Abschluss einer Übertragung einer vordefinierten Sequenz der nicht-Echtzeit-Befehlsdaten.

6. Maschinenlesbares Datenspeichermedium, das ein Computerprogrammmittel trägt, das bei Ausführung in einer Schnittstellenvorrichtung gemäß Anspruch 3 das Verfahren gemäß Anspruch 4 oder 5 durchführt.

## Revendications

1. Dispositif d'interface conçu pour être monté dans une imprimante pour relier l'imprimante à un ordinateur hôte et pour transformer des données, comprenant des données d'instruction, de l'ordinateur hôte à l'imprimante, comprenant :
des premiers moyens (103) d'interface pour relier de manière amovible le dispositif (101, 101') d'interface à l'ordinateur (102) hôte et pour recevoir des données d'instruction de l'ordinateur (102) hôte, et
des deuxièmes moyens (105) d'interface pour relier de manière amovible le dispositif (101, 101') d'interface à l'imprimante (104) pour envoyer ces données à l'imprimante et pour recevoir des informations de situation de l'imprimante indiquant si ou non l'imprimante est prête à recevoir des données ;
dans lequel ces données comprennent deux types distincts de données d'instruction, des données d'instruction en temps réel et des données d'instruction qui ne sont pas en temps réel,
le dispositif d'interface en outre
comprenant des moyens (106) de détection sensibles aux deuxièmes moyens (105) d'interface pour détecter un premier état lorsque l'information de situation indique que l'imprimante est prête à recevoir des données et pour détecter sinon un deuxième état ;
des moyens (106) d'interprétation d'instruction pour détecter toute donnée d'instruction en temps réel parmi les données d'instruction reçues par les premiers moyens (103) d'interface,
des moyens (113, 120 ; 803, 804) de mémorisation pour mémoriser des données reçues par les premiers moyens (103) d'interface lorsque les moyens (106) de détection détectent le deuxième état ;
des moyens (106) de discrimination pour détecter si les moyens de mémorisation peuvent mémoriser d'autres données ;
des moyens de notification sensibles aux moyens (106) de discrimination pour notifier à l'ordinateur (102) hôte que les moyens de discrimination détectent que les moyens (113, 120 ; 803, 804) de mémorisation ne peuvent pas mémoriser d'autres données ; et
des moyens (106) de commande pour commander, lorsque les moyens de détection détectent le premier état, les deuxièmes moyens (105) d'interface pour envoyer des données mémorisées dans les moyens (113, 120 ; 803, 804) de mémorisation et pour envoyer ensuite des données qui ont été reçues par les premiers moyens (103) d'interface après que les moyens (106) de détection détectent le premier état ;
les moyens (106) de commande comprenant un dispositif de commande de transmission d'instruction pour faire que les deuxièmes moyens (105) d'interface envoient des données d'instruction en temps réel détectées par des moyens (106) d'interprétation d'instruction à l'imprimante indépendamment du fait que les moyens de détection détectent le premier ou le deuxième état.

2. Dispositif suivant la revendication 1, **caractérisé en ce que** le dispositif (106) de commande de transmission d'instruction est conçu pour commander les deuxièmes moyens (105) d'interface pour qu'ils envoient, lorsque des données d'instruction qui ne sont pas en temps réel sont envoyés à l'imprimante, les données d'instruction en temps réel après avoir achevé la transmission d'une séquence définie à l'avance de données d'instruction qui ne sont pas en temps réel.

3. Dispositif suivant la revendication 1 ou 2, **caractérisé en ce que** les moyens de détection, les moyens d'interprétation d'instruction, les moyens (106) de commande et le dispositif de commande de transmission d'instruction sont mis en oeuvre par un microprocesseur (106) commandé par un programme.

4. Procédé de commande d'un dispositif d'interface tel que défini dans la revendication 1, comprenant les stades suivants :
a) on reçoit des données de l'ordinateur (102) hôte ;
b) on reçoit une information de situation de l'imprimante indiquant si ou non l'imprimante est prête à recevoir des données ;
c) on détecte un premier état lorsque l'information de situation indique que l'imprimante est prête à recevoir des données et on détecte sinon un deuxième état ;
d) on détecte toute donnée d'instruction en temps réel parmi les données reçues dans le stade (a) ;
e) on mémorise, lorsque le deuxième état est détecté dans le stade c), des données reçues dans le stade a) dans des moyens (113, 120 ; 803, 804) de mémorisation du dispositif d'interface ;
f) on détecte si les moyens (113, 120 ; 803, 804) de mémorisation peuvent mémoriser d'autres données et on notifie à l'ordinateur (102) hôte que les moyens (113, 120 ; 803, 804) de mémorisation ne peuvent pas mémoriser d'autres données ;
g) on envoie, lorsque le premier état est détecté dans le stade c), des données mémorisées dans les moyens (113, 120 ; 803, 804) de mémorisation et on envoie ensuite des données qui ont été reçues dans le stade a) après que le premier état a été détecté ; et
h) on envoie des données d'instruction en temps réel indépendamment du fait que le premier ou le deuxième état est détecté dans le stade c), tout en envoyant des données d'instruction qui ne sont pas en temps réel seulement si le premier état est détecté dans le stade c).

5. Procédé suivant la revendication 4, dans lequel, lorsque des données d'instruction qui ne sont pas en temps réel sont envoyées à l'imprimante, le stade h) comprend l'envoi de données d'instruction en temps réel après achèvement de la transmission d'une séquence définie à l'avance de données d'instruction qui ne sont pas en temps réel.

6. Moyen de programme informatique portant un support de mémorisation de données pouvant être lu par une machine qui, lorsqu'il est exécuté dans un dispositif d'interface tel que défini à la revendication 3, effectue le procédé tel que défini à la revendication 4 ou 5.
